# EUROPEAN PATENT APPLICATION

(11) **EP 4 501 936 A1**
(43) Date of publication of application: **05.02.2025**
(21) Application number: 23779912.7
(22) Date of filing: 22.03.2023
(51) Int. Cl.: C07F 7/18

(54) **BRANCHED ORGANOPOLYSILOXANE AND METHOD FOR PRODUCING SAME**

(30) Priority: 31.03.2022 JP 2022059422
(71) Applicant: SHIN-ETSU CHEMICAL CO., LTD., Tokyo 1000005 (JP)
(72) Inventor: KANAI Tomoya, Annaka-shi, Gunma 379-0224 (JP); KIKUCHI Hiroko, Tokyo 100-0005 (JP)
(74) Representative: Mewburn Ellis LLP
(86) International application number: PCT/JP2023/011110
(87) International publication number: WO 2023/189898

(57) **Abstract**

The purpose of the present invention is to provide a branched organopolysiloxane that has excellent compatibility with polar oils and the like and that can serve as a substitute for conventional low-molecular-weight siloxanes. Furthermore provided is a production method with which the branched organopolysiloxane is easily obtained at high purity.

A branched organopolysiloxane represented by formula (1) 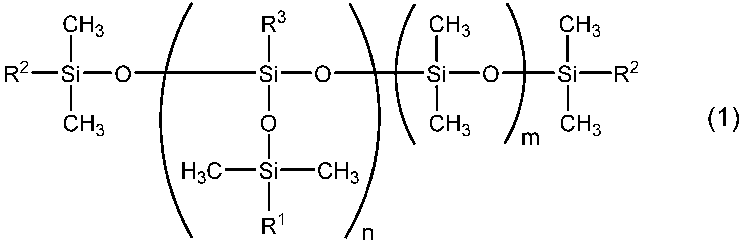 (in the formula, R¹ is independently a C1-3 alkyl group, R² independently represent a C2 or C3 alkyl group, R³ independently represent a C1-3 alkyl group, n is 1 or 2, and m is an integer of 0-3 when n = 1 but is 0 or 1 when n = 2; additionally, the bonding order of the siloxane units is not limited to the above, and the bonding state of the siloxane units may be block or random).

## Description

### TECHNICAL FIELD

The present invention relates to a branched organopolysiloxane and a method for producing the same.

### BACKGROUND ART

Many of organopolysiloxanes with 6 or less silicon atoms have high volatility and high compatibility with organic compounds. Thus, such organopolysiloxanes have been used as, for example, substitutes for organic solvents and as cosmetic oils (Patent Document 1). In particular, cyclic polysiloxanes with 4 to 6 silicon atoms have found many uses for such reasons as the ease of synthesis. However, in recent years, there has been concern about the impacts of the cyclic polysiloxanes on the environment and safety.

Linear organopolysiloxanes with 6 or less silicon atoms and branched tristrimethylsiloxymethylsilane have been used in various applications. However, low-molecular weight organopolysiloxanes having 3 or less silicon atoms cause strong skin irritation and are not preferred particularly in cosmetics. The above linear and branched organopolysiloxanes are often produced by hydrolysis. This fact causes problems, such as the occurrence of the low-molecular weight siloxanes described above and the labor for separating the products.

Furthermore, the above-described organopolysiloxanes are poorly compatible with polar oils added to cosmetics and fail to give transparent mixtures, and thus may impair the feeling on use and the stability of cosmetics. This tendency is noticeable when an organic ultraviolet absorber is used. Furthermore, these organopolysiloxanes sometimes exhibit low affinity for oil ingredients, such as waxes, that are added to solidify cosmetics. Such low affinity inhibits the crystallization of the oil ingredient to invite a failure to obtain the desired hardness of the preparation.

Patent Document 2 discloses a method for producing a branched tetrasiloxane with high purity. In the method, a trialkoxysilane compound is added to and reacted with a mixed solution of a disiloxane compound, an alcohol, and an acid catalyst, and water is further added to effect co-hydrolysis. When, however, the disiloxane is substituted by an alkyl group having 2 or more carbon atoms, the acid catalyst encounters difficulties in cleaving the siloxane bonds and consequently the yield tends to be lowered. Problems thus arise, such as the need to increase the amount of the acid catalyst that is used.

Synthesis has been reported of a branched tetrasiloxane in which a C2 or higher alkyl group is bonded to a branch-point silicon atom (Patent Document 2). However, there has been no synthesis reported of a compound that has a C2 or higher alkyl group in a terminal trialkylsiloxy group.

### PRIOR ART DOCUMENTS

### PATENT DOCUMENTS

Patent Document 1: WO 2001/015658
Patent Document 2: JP-A 2004-352677

### SUMMARY OF INVENTION

### TECHNICAL PROBLEM

The present invention has been made in view of the circumstances discussed above. It is therefore an object of the present invention to provide a branched organopolysiloxane that can replace the conventional low-molecular siloxanes and has good compatibility with polar oils and the like. A further object of the present invention is to provide a method capable of producing the branched organopolysiloxane easily and with high purity.

### SOLUTION TO PROBLEM

The present inventors carried out intensive studies directed to achieving the above objects and have found that the branched organopolysiloxane of the present invention excels in compatibility with various organic compounds and is suited for use as a solvent or a cosmetic oil. Based on the finding, the present inventors have completed the present invention.

Thus, the present invention provides a branched organopolysiloxane and a method for producing the same.
1. A branched organopolysiloxane represented by formula (1) below: 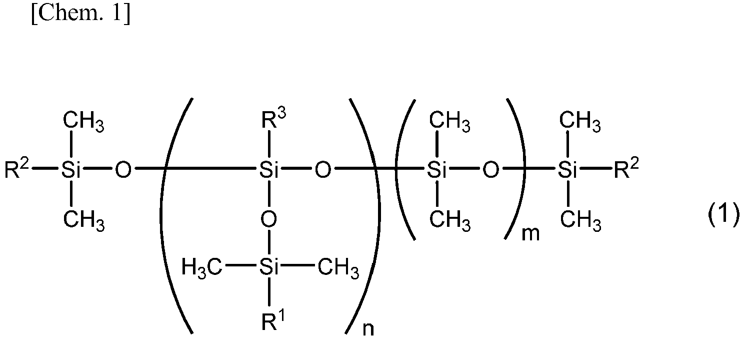 (wherein R¹ is independently at each a C1-C3 alkyl group; R² is independently at each a C2 or C3 alkyl group; R³ independently at each occurrence is a C1-C3 alkyl group; n is 1 or 2; when n = 1, m is an integer of 0 to 3 and, when n = 2, m is 0 or 1; and the siloxane units are not limited to being bonded in the above order and the manner of bonding of the siloxane units is optionally blockwise or random).
2. The branched organopolysiloxane according to 1, which has a boiling point at 10 hPa in the range of 87 to 119°C.
3. The branched organopolysiloxane according to 1 or 2, wherein formula (1) is such that R¹ is a methyl group or an ethyl group, R² is an ethyl group, R³ is a methyl group, n is 1, and m is 0.
4. A production method for manufacturing the branched organopolysiloxane described in 1, the method including a step of hydrosilylating an organohydrogenpolysiloxane represented by formula (2) below with a C2 or C3 alkene, 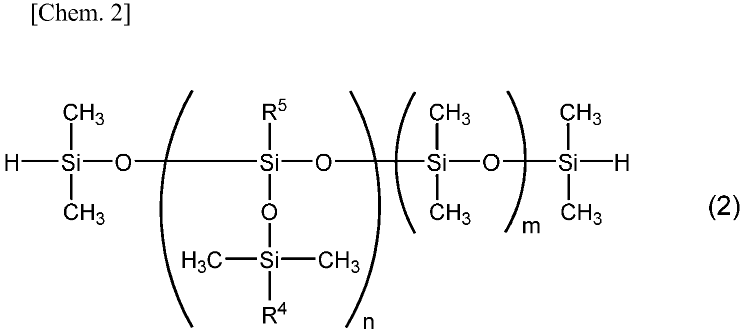 (wherein R⁴ is independently a hydrogen atom or a group represented by the R¹; R⁵ is independently a hydrogen atom or a group represented by the R³; m and n are the same as defined in formula (1); and the siloxane units are not limited to being bonded in the above order and the manner of bonding of the siloxane units is optionally blockwise or random).

### ADVANTAGEOUS EFFECTS OF INVENTION

The branched organopolysiloxane provided according to the present invention can replace the conventional low-molecular siloxanes and has good compatibility with polar oils and the like. The branched organopolysiloxane is suited for use as a solvent or a cosmetic oil Furthermore, the production method provided herein can manufacture the branched organopolysiloxane easily and with high purity.

### BRIEF DESCRIPTION OF DRAWINGS

[FIG. 1] FIG. 1 is a ¹H-NMR spectrum chart of a branched organopolysiloxane synthesized in Synthesis Example 1.
[FIG. 2] FIG. 2 is a ²⁹Si-NMR spectrum chart of the branched organopolysiloxane synthesized in Synthesis Example 1.

### DESCRIPTION OF EMBODIMENTS

The present invention will be described in detail below.

### I. Branched Organopolysiloxanes

The branched organopolysiloxane of the present invention is represented by formula (1) below: 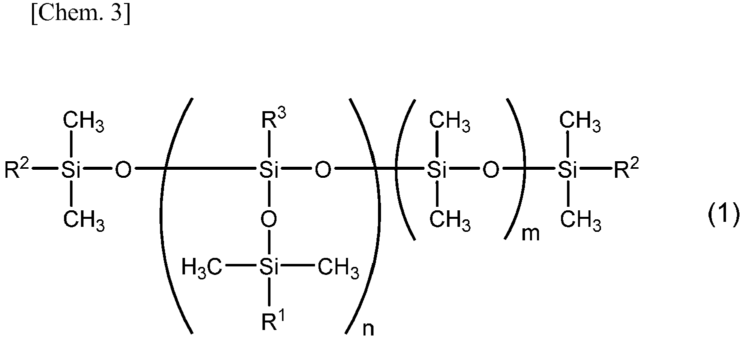 (wherein R¹ is independently a C1-C3 alkyl group; R² is independently a C2 or C3 alkyl group; R³ is independently a C1-C3 alkyl group; n is 1 or 2; when n = 1, m is an integer of 0 to 3 and, when n = 2, m is 0 or 1; and the siloxane units are not limited to being bonded in the above order and the manner of bonding of the siloxane units is optionally blockwise or random).

R¹ independently at each occurrence is a C1-C3 alkyl group. Specific examples include methyl group, ethyl group, and n-propyl group. In particular, methyl group or ethyl group is preferable. R² independently at each occurrence is a C2 or C3 alkyl group. Specific examples include ethyl group and n-propyl group. In particular, ethyl group is preferable. R³ independently at each occurrence is a C1-C3 alkyl group. Specific examples include methyl group, ethyl group, and n-propyl group. In particular, methyl group or ethyl group is preferable. The letter n is 1 or 2, and preferably 1. When n = 1, m is an integer of 0 to 3, and preferably an integer of 0 to 2. When n = 2, m is 0 or 1, and preferably 0. The siloxane units are not limited to being bonded in the above order and the manner of bonding of the siloxane units is optionally blockwise or random.

In the branched organopolysiloxane of formula (1), it is preferable that R¹ be a methyl group or an ethyl group, R² be an ethyl group, R³ be a methyl group, n be 1, and m be 0. Such a branched organopolysiloxane, especially when added to a cosmetic, gives a light feel and good spreadability to the cosmetic. Furthermore, the cosmetic has excellent water repellency and forms a uniform cosmetic film. Furthermore, the cosmetic does not produce a strong oily feel and can achieve a good feeling on use. In addition, the branched organopolysiloxane allows a cosmetic to attain excellent over-time stability and cosmetic durability even when oils, such as silicones, hydrocarbon oils, and esters, oil ingredients that are solid at 25°C, or organic ultraviolet absorbers are added.

Examples of the branched organopolysiloxanes represented by formula (1) include the following:

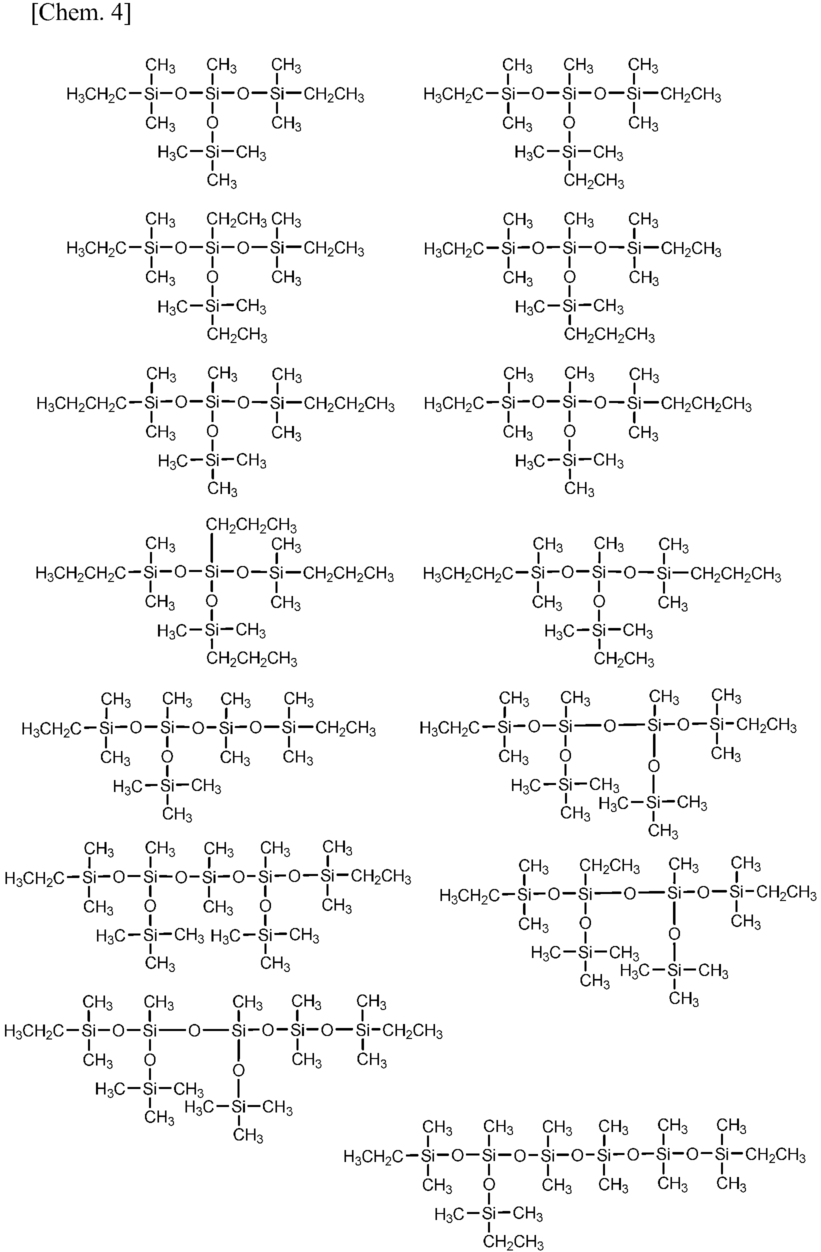

The branched organopolysiloxane of the present invention preferably has a boiling point at 10 hPa in the range of 87 to 119°C. This range ensures, in particular, that the compound has excellent handleability and, when added to a cosmetic, does not give a dry feeling when applied to the skin and does not give a strong oily feel after application. If the boiling point is less than 87°C, the compound has a high volatilization rate and may give a dry feeling. When the boiling point is up to 119°C, the oily feel is reduced. In the present invention, the boiling point is the equilibrium reflux boiling point measured by heating the sample at 10 hPa and recording the internal temperature at which the sample is refluxed at a rate of several drops per second.

The kinematic viscosity at 25°C of the branched organopolysiloxane of the present invention is preferably 2.0 to 6.0 mm²/s, and more preferably 2.2 to 3.5 mm²/s. The viscosity is a value measured at 25°C using Cannon-Fenske viscometer described in JIS Z8803: 2011.

The branched organopolysiloxane of the present invention has good compatibility with polar oils and the like. Examples of the polar oils include organic ultraviolet absorbers, such as ethylhexyl methoxycinnamate and octocrylene. The branched organopolysiloxane has particularly high compatibility with ethylhexyl methoxycinnamate.

### II. Methods for Producing the Branched Organopolysiloxanes

For example, the branched organopolysiloxane of the present invention may be produced through a step described below. Such a production method can manufacture the branched organopolysiloxane of formula (1) easily and with high purity. In the step, an organohydrogenpolysiloxane represented by formula (2) below is caused to undergo hydrosilylation with a C2 or C3 alkene. 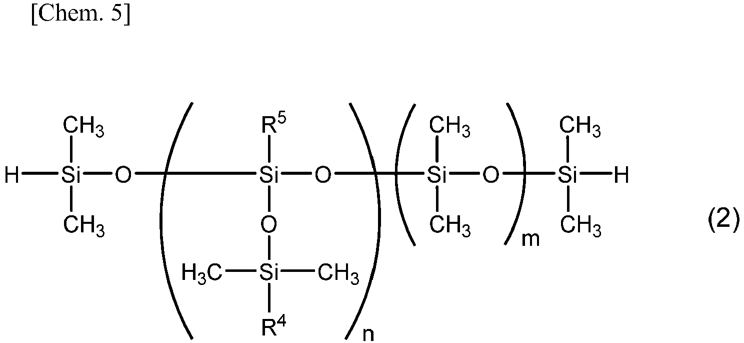 (In the formula, R⁴ is independently a hydrogen atom or a group represented by the R¹; R⁵ is independently a hydrogen atom or a group represented by the R³; m and n are the same as defined in formula (1); and the siloxane units are not limited to being bonded in the above order and the manner of bonding of the siloxane units is optionally blockwise or random.)

R⁴ independently at each occurrence is a hydrogen atom or a group represented by the R¹. Specific examples include hydrogen atom, methyl group, ethyl group, and n-propyl group. R⁵ independently at each occurrence is a hydrogen atom or a group represented by the R³. Specific examples include hydrogen atom, methyl group, ethyl group, and n-propyl group. The letters m and n are the same as defined in formula (1). Examples of the C2 or C3 alkenes include ethylene and propylene.

The blending ratio of the C2 or C3 alkene to the organohydrogenpolysiloxane represented by formula (2) is preferably 1.0 to 2.0, and preferably 1.0 to 1.2 in terms of the molar ratio of the C2 or C3 alkene to 1 mol of the hydrosilyl groups in formula (2).

The hydrosilylation reaction is preferably performed in the presence of a platinum catalyst or a rhodium catalyst. Specifically, for example, chloroplatinic acid, alcohol-modified chloroplatinic acid, and chloroplatinic acid-vinylsiloxane complex are suitably used. The amount in which the catalyst is used may be a catalytic amount and, in particular, is preferably up to 50 ppm, and more preferably up to 20 ppm in terms of the amount of platinum or rhodium relative to the organohydrogenpolysiloxane represented by formula (2).

The hydrosilylation reaction may be performed in the absence of a solvent, or an organic solvent may be used as required. Examples of the organic solvents include aromatic hydrocarbons, such as toluene and xylene; aliphatic or alicyclic hydrocarbons, such as n-pentane, n-hexane, and cyclohexane; cyclic ether compounds, such as tetrahydrofuran and dioxane; and ketones, such as acetone and methyl ethyl ketone. In particular, the hydrosilylation reaction is preferably performed in the absence of a solvent or is preferably carried out using a hydrocarbon or an ether compound as an organic solvent.

Although the hydrosilylation reaction conditions are not particularly limited, it is preferable to carry out the reaction at 40 to 100°C for 1 to 10 hours while introducing ethylene gas or propylene gas into or onto the liquid in the reaction vessel.

### III. Cosmetics

The branched organopolysiloxane has good compatibility with polar oils and the like and is therefore suited for use as a solvent or a cosmetic oil. When the branched organopolysiloxane of the present invention is added to a cosmetic or the like, the amount thereof is not particularly limited and may be appropriately in the range of 0.01 to less than 100 wt%. The form of the preparation, the purpose of use, and optional ingredients and the amounts thereof are not particularly limited and may be appropriately selected from those that are known. The branched organopolysiloxane is particularly excellent in compatibility with ethylhexyl methoxycinnamate and is therefore suited for use in sunblock preparations, such as sunscreens. Cosmetics containing the branched organopolysiloxane of the present invention have a light feel and good spreadability and can form highly water-repellent and uniform films, that is, long-lasting and uniform cosmetic films. Sunscreens are also excellent in storage stability at low and high temperatures.

When ultraviolet shielding effects are desired in the cosmetics, it is preferable to add an ultraviolet absorber. The branched organopolysiloxane in the present invention has excellent compatibility with ultraviolet absorbers. Thus, such cosmetics containing ultraviolet absorbers have a good feeling on use and attain excellent over-time stability and cosmetic durability. The compound names are sometimes those cited in *Kesho̅hin Hyo̅ji Meisho̅* [Japanese Cosmetic Labeling Names] or the International Nomenclature of Cosmetic Ingredients (INCI). In this Specification, when the name of an ingredient differs in these two lists, the *Kesho̅hin Hyo̅ji Meisho̅* name is given first in lower case letters, followed by, in parenthesis, the capitalized INCI name. When the name from the two lists is the same, it is followed simply by "(INCI)".

The ultraviolet absorbers are not particularly limited and any ingredients usually added to cosmetics may be used. Specific examples include oxybenzone-1 (INCI: Benzophenone-1), oxybenzone-2 (INCI: Benzophenone-2), oxybenzone-3 (INCI: Benzophenone-3), oxybenzone-4 (INCI: Benzophenone-4), oxybenzone-5 (INCI: Benzophenone-5), oxybenzone-6 (INCI: Benzophenone-6), oxybenzone-9 (INCI: Benzophenone-9), Homosalate (INCI), octocrylene, t-butylmethoxydibenzoylmethane, ethylhexyl salicylate, hexyl diethylaminohydroxybenzoylbenzoate, polysilicone-15, octyl dimethoxybenzylidenedioxoimidazolidinepropionate (INCI: Ethylhexyl Dimethoxybenzylidene Dioxoimidazolidine Propionate), Terephthalylidene Dicamphor Sulfonic Acid (INCI), Ethylhexyltriazone (INCI), methylbis(trimethylsiloxy)silylisopentyl trimethoxycinnamate (INCI: Isopentyl Trimethoxycinnamate Trisiloxane), Drometrizole Trisiloxane (INCI), Ethylhexyl Dimethyl PABA (INCI), Isopropyl Methoxycinnamate (INCI), ethylhexyl methoxycinnamate, bisethylhexyloxyphenol methoxyphenyl triazine, Phenylbenzimidazole Sulfonic Acid (INCI), methylenebisbenzotriazolyltetramethylbutylphenol, Glyceryl Ethylhexanoate Dimethoxycinnamate (INCI), Glyceryl PABA (INCI), Diisopropyl Methyl Cinnamate (INCI), Cinoxate (INCI), and Ethylhexyl Dimethoxybenzylidene Dioxoimidazolidine Propionate (INCI).

Furthermore, a UVA absorber (such as, for example, hexyl diethylaminohydroxybenzoylbenzoate) and a UVB absorber (such as, for example, ethylhexyl methoxycinnamate) may be used in combination, or absorbers belonging to the same type may be combined appropriately.

In this case, it is preferable that the ultraviolet absorber be one or more organic ultraviolet absorbers selected from Ethylhexyl Methoxycinnamate (INCI), hexyl diethylaminohydroxybenzoylbenzoate (INCI: Diethylamino Hydroxybenzoyl Hexyl Benzoate), Ethylhexyl Salicylate (INCI), Polysilicone-15 (INCI), t-butylmethoxydibenzoylmethane (INCI: Butyl Methoxydibenzoylmethane), oxybenzone (INCI: Benzophenone), Methylenebisbenzotriazolyltetramethylbutylphenol (INCI), Bisethylhexyloxyphenolmethoxyphenyltriazine (INCI), and Octocrylene (INCI). These organic ultraviolet absorbers, in particular, advantageously offer higher ultraviolet absorbing effects and exhibit excellent compatibility with the branched organopolysiloxanes of the present invention.

The amount of the ultraviolet absorber is preferably 1 to 50 wt% of the cosmetic, and more preferably 3 to 20 wt% of the cosmetic.

### EXAMPLES

Hereinafter, the present invention will be described in detail by presenting Synthesis Examples and Examples. However, the present invention is not limited to the following Examples. Synthesis Examples illustrate methods of synthesizing the branched organopolysiloxanes of the present invention, and Examples illustrate exemplary formulations involving the branched organopolysiloxanes of the present invention. ¹H-NMR was performed using Avance III 400 manufactured by Brucker, and ²⁹Si-NMR was made with ECX-500 manufactured by JEOL Ltd. The purity is the area% in a chromatogram measured by gas chromatography. The kinematic viscosity described here is a value measured at 25°C using Cannon-Fenske viscometer described in JIS Z8803: 2011. Synthesis Examples give examples of the branched organopolysiloxanes, and Examples and Comparative Examples show exemplary cosmetics. The amounts described with product names are the amounts of the products added.

### [Synthesis Example 1]

### 1,5-Diethyl-3-ethyldimethylsiloxy-1,1,3,5,5-pentamethyltrisiloxane

A 1 L four-necked flask was charged with 580 g of an organohydrogenpolysiloxane (purity: 100%) represented by formula (3) below and 0.6 g of a 0.5 wt% toluene solution of chloroplatinic acid-vinylsiloxane complex.

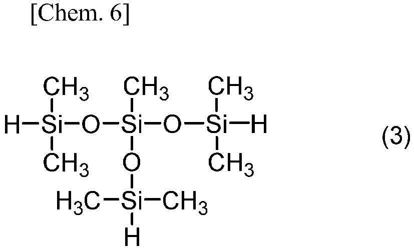

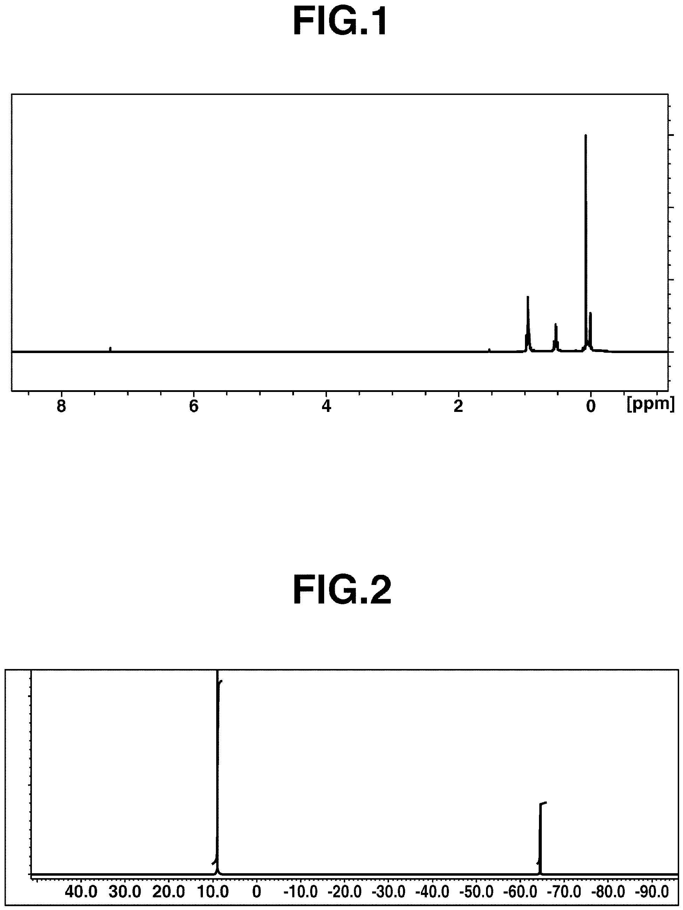

Ethylene gas was blown into the liquid while performing stirring at 40 to 50°C, and the hydrosilylation reaction was carried out while maintaining the temperature at 60 to 70°C. The reaction was followed by gas chromatography. The reaction was terminated when the ratio of the product reached up to 95%. Distillation was performed under reduced pressure (oil bath temperature: 90-130°C, 1-30 hPa) to give 630 g of a colorless transparent liquid fraction. ¹H-NMR and ²⁹Si-NMR spectral analyses of the fraction showed that the target organopolysiloxane (1,5-diethyl-3-ethyldimethylsiloxy-1,1,3,5,5-pentamethyltrisiloxane) having the structure illustrated by formula (4) below was obtained with a purity of 100% and a yield of 83%. The kinematic viscosity was 2.5 mm²/s, and the boiling point was 113°C/10 hPa. The ¹H-NMR spectrum chart is illustrated in FIG. 1, and the ²⁹Si-NMR spectrum chart in FIG. 2.

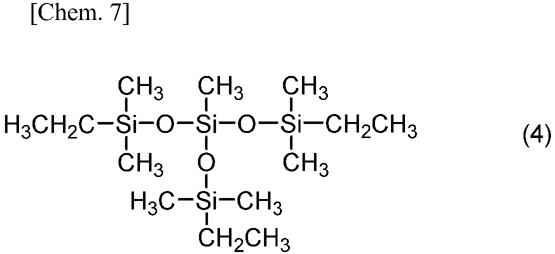

### [Synthesis Example 2]

### 1,5-Diethyl-3-trimethylsiloxy-1,1,3,5,5-pentamethyltrisiloxane

A 1 L four-necked flask was charged with 490 g of an organohydrogenpolysiloxane (purity: 72%) represented by formula (5) below and 0.5 g of a 0.5 wt% toluene solution of chloroplatinic acid-vinylsiloxane complex.

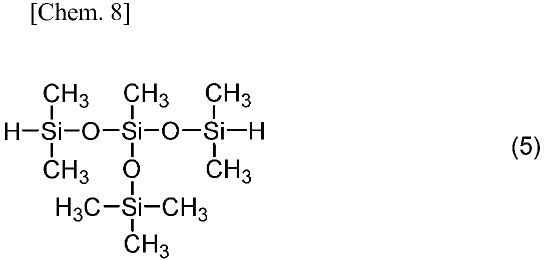

Ethylene gas was blown into the liquid while performing stirring at 40 to 50°C, and the hydrosilylation reaction was carried out while maintaining the temperature at 60 to 70°C. The reaction was followed by gas chromatography. The reaction was terminated when the ratio of the product reached up to 95%. Distillation was performed under reduced pressure (oil bath temperature: 90-130°C, 1-30 hPa) to give 153 g of a colorless transparent liquid fraction. ¹H-NMR and ²⁹Si-NMR spectral analyses of the fraction showed that the target organopolysiloxane (1,5-diethyl-3-trimethylsiloxy-1,1,3,5,5-pentamethyltrisiloxane) having the structure illustrated by formula (6) below was obtained with a purity of 100% and a yield of 36%. The kinematic viscosity was 2.2 mm²/s, and the boiling point was 97°C/10 hPa.

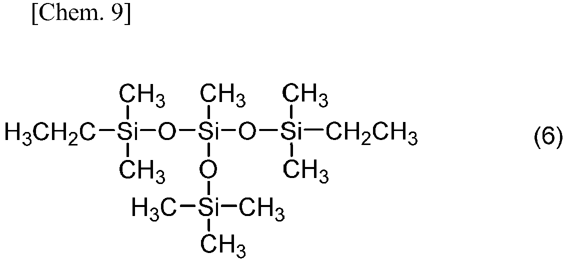

### [Test of Compatibility with Ethylhexyl Methoxycinnamate]

The compatibility of the branched organopolysiloxanes obtained in Synthesis Examples 1 and 2 and other silicon compounds with ethylhexyl methoxycinnamate (an organic ultraviolet absorber) was evaluated by the method described below. The evaluation results are described in Table 1.

### (Evaluation Method)

The branched organopolysiloxane obtained in Synthesis Example 1 or 2 or other silicon compound, and ethylhexyl methoxycinnamate (also written as OMC) were collected in a weight ratio described in Table 1 and were mixed together by shaking at room temperature. The state of dissolution was examined the next day. The state of dissolution is indicated by O: dissolved and ×: separated.

**[Table 1]**

| Siloxanes | OMC:Sx weight ratio | State of dissolution |
|---|---|---|
| KF-96L-1.5cs | 1:1 | × |
| KF-96L-2cs | 1:1 | × |
| TMF-1.5 | 1:1 | × |
| Tristrimethylsiloxypropylsilane | 1:1 | × |
| D5: KF-995 | 1:1 | × |
| D6 | 1:1 | × |
| Branched organopolysiloxane of Synthesis Example 1 | 1:1 | ○ |
| Branched organopolysiloxane of Synthesis Example 2 | 1:1 | ○ |

| | |
|---|---|
| KF-96L-1.5cs: | Decamethyltetrasiloxane (manufactured by Shin-Etsu Chemical Co., Ltd.) |
| KF-96L-2cs: | Undecamethylpentasiloxane (manufactured by Shin-Etsu Chemical Co., Ltd.) |
| TMF-1.5: | Tristrimethylsiloxymethylsilane (manufactured by Shin-Etsu Chemical Co., Ltd.) |
| KF-995: | Decamethylcyclopentasiloxane (manufactured by Shin-Etsu Chemical Co., Ltd.) |
| D6: | Dodecamethylhexasiloxane |

As described in Table 1, the branched organopolysiloxanes obtained in Synthesis Examples 1 and 2 of the present invention were shown to have higher compatibility with ethylhexyl methoxycinnamate than the other silicon compounds.

### [Test of Compatibility with Oil Ingredients That Are Solid at 25°C and Crystallization Test]

The branched organopolysiloxane obtained in Synthesis Example 2 and other organopolysiloxanes were tested as described below to evaluate the compatibility with oil ingredients that were solid at 25°C and to evaluate the influence on crystallization. The evaluation results are described in Table 2.

### (Evaluation Methods)

An oil ingredient that was solid at 25°C and the branched organopolysiloxane obtained in Synthesis Example 2 or other organopolysiloxane were collected in a weight ratio of 1:9 and were heated at 90°C for 20 minutes. The state of dissolution was visually examined and was evaluated based on the following criteria.
Uniformly dissolved: Ⓞ
Uniformly dispersed: ○
Separated: ×

Subsequently, each of the heated mixture liquids was added to a jar container and was allowed to stand at 25°C for 2 days to solidify. The rheometer hardness of the solids was measured. The measurement was performed three times for each solid using rheometer RT2002D·D (manufactured by RHEOTECH) under the conditions where RANGE: 200 g, adapter: 3 mm diameter (rod type), sample stage speed: 5 cm/min, and penetration width: 1 cm. The results of the three measurements were averaged. The higher the value, the higher the hardness (unit: g).

**[Table 2]**

| Oil ingredients solid at 25°C | | Synthesis Example 2 | KF-96L-1.5cs | KF-96L-2cs | KF-995 | KF-4422 |
|---|---|---|---|---|---|---|
| Polyethylene | State of dissolution | Ⓞ | ○ | × | ○ | Ⓞ |
| | Rheometer hardness (g) | 82 | 81 | 145 | 144 | 76 |
| Candelilla wax | State of dissolution | ○ | × | × | × | × |
| | Rheometer hardness (g) | 160 | 138 | 190 | 176 | 138 |
| Behenyl alcohol | State of dissolution | Ⓞ | Ⓞ | Ⓞ | Ⓞ | Ⓞ |
| | Rheometer hardness (g) | 88 | 52 | 49 | 76 | 59 |

| | |
|---|---|
| KF-96L-1.5cs: | Decamethyltetrasiloxane (manufactured by Shin-Etsu Chemical Co., Ltd.) |
| KF-96L-2cs: | Undecamethylpentasiloxane (manufactured by Shin-Etsu Chemical Co., Ltd.) |
| TMF-1.5: | Tristrimethylsiloxymethylsilane (manufactured by Shin-Etsu Chemical Co., Ltd.) |
| KF-995: | Decamethylpentasiloxane (manufactured by Shin-Etsu Chemical Co., Ltd.) |
| KF-4422: | Diethyloctamethyltetrasiloxane (manufactured by Shin-Etsu Chemical Co., Ltd.) |

As described in Table 2, the branched organopolysiloxane of the present invention was well dissolved or uniformly dispersed in the solid oil ingredients. In particular, the branched organopolysiloxane of the present invention was uniformly dispersed in candelilla wax, whereas the other silicon compounds were separated. Furthermore, the branched organopolysiloxane of the present invention was shown to have higher compatibility with polyethylene than the linear dimethylpolysiloxanes. Furthermore, it has been shown that the blend composition can be solidified by cooling of the hot composition.

In the preparation of a blend composition using an oil that is highly compatible with a solid oil ingredient, such as wax, it is generally known that cooling of a thermal melt gives a solid composition having low hardness. Even when the ingredients are uniformly dissolved or dispersed when heated, it is sometimes difficult that the composition that has been cooled attains a hardness enough to give a cosmetic with excellent over-time stability. The branched organopolysiloxane of the present invention was well dissolved or uniformly dispersed in the solid oil ingredients and the resultant compositions, after being cooled, had high hardness as compared to the other silicon compounds.

Hereinafter, the present invention will be described in detail by presenting Examples and Comparative Examples of exemplary cosmetic formulations using the branched organopolysiloxanes obtained in Synthesis Examples 1 and 2 of the present invention. However, the present invention is not limited to these Examples. The amounts are indicated in % (wt%) unless otherwise specified.

### [Examples 1 and 2 and Comparative Examples 1 to 3] W/O sunscreens

W/O sunscreens were prepared in accordance with the production method described below using the branched organopolysiloxanes from Synthesis Examples 1 and 2 in Examples 1 and 2, and without using these branched organopolysiloxanes in Comparative Examples 1 to 3. The compositions of Examples 1 and 2 and Comparative Examples 1 to 3 are described in Table 3.

**[Table 3]**

| | | Example 1 | Example 2 | Comp. Example 1 | Comp. Example 2 | Comp. Example 3 |
|---|---|---|---|---|---|---|
| 1 | Branched organopolysiloxane of Synthesis Example 1 | 12.0 | - | - | - | - |
| 2 | Branched organopolysiloxane of Synthesis Example 2 | - | 12.0 | - | - | - |
| 3 | KF-995 Decamethylcyclopentasiloxane (*1) | - | - | 12.0 | - | - |
| 4 | TMF-1.5 Tristrimethylsiloxymethylsilane (*2) | - | - | - | 12.0 | - |
| 5 | KF-56A Diphenylsiloxyphenyl trimethicone (*3) | 2.0 | 2.0 | 2.0 | 2.0 | 14.0 |
| 6 | Ethylhexyl methoxycinnamate | 7.5 | 7.5 | 7.5 | 7.5 | 7.5 |
| 7 | Hexyl diethylaminohydroxybenzoylbenzoate | 2.0 | 2.0 | 2.0 | 2.0 | 2.0 |
| 8 | Octocrylene | 2.5 | 2.5 | 2.5 | 2.5 | 2.5 |
| 9 | Ethylhexyl salicylate | 1.0 | 1.0 | 1.0 | 1.0 | 1.0 |
| 10 | Crosslinked polyether-modified silicone mixture (*4) | 3.5 | 3.5 | 3.5 | 3.5 | 3.5 |
| 11 | Crosslinked phenyl-modified silicone mixture (*5) | 3.0 | 3.0 | 3.0 | 3.0 | 3.0 |
| 12 | Alkyl polyether co-modified silicone (*6) | 1.5 | 1.5 | 1.5 | 1.5 | 1.5 |
| 13 | 1,3-Butylene glycol | 3.0 | 3.0 | 3.0 | 3.0 | 3.0 |
| 14 | Sodium citrate | 0.5 | 0.5 | 0.5 | 0.5 | 0.5 |
| 15 | Sodium chloride | 0.5 | 0.5 | 0.5 | 0.5 | 0.5 |
| 16 | Ethanol | 5.0 | 5.0 | 5.0 | 5.0 | 5.0 |
| 17 | Purified water | 56.0 | 56.0 | 56.0 | 56.0 | 56.0 |
| Total | | 100.0 | 100.0 | 100.0 | 100.0 | 100.0 |

| | | | | | | |
|---|---|---|---|---|---|---|
| (*1) Decamethylcyclopentasiloxane (manufactured by Shin-Etsu Chemical Co., Ltd.) (*2) Tristrimethylsiloxymethylsilane (INCI: Methyltrimethicone) (manufactured by Shin-Etsu Chemical Co., Ltd.) (*3) Diphenylsiloxyphenyl trimethicone (manufactured by Shin-Etsu Chemical Co., Ltd.) (*4) Mixture of 70-80% dimethicone + 20-30% (dimethicone/(PEG-10/15)) crosspolymer (manufactured by Shin-Etsu Chemical Co., Ltd.) (*5) Mixture of 80-85% diphenylsiloxyphenyl trimethicone + 15-20% crosslinked phenyl-modified dimethylpolysiloxane (manufactured by Shin-Etsu Chemical Co., Ltd.) (*6) Cetyl PEG/PPG-10/1 dimethicone (manufactured by Shin-Etsu Chemical Co., Ltd.) | | | | | | |

### [Production Method]

The ingredients 1 to 12 were mixed together uniformly by stirring. Separately, the ingredients 13 to 16 were uniformly dissolved into the ingredient 17, and the mixture was gently added to the mixture of the ingredients 1 to 12 described above. The resultant mixture was stirred to form an emulsion, which was then loaded into a predetermined container. A sunscreen was thus obtained.

The W/O sunscreens obtained were used by a panel of ten female experts to test (1) feel (light feel), (2) spreadability, (3) film uniformity, and (4) durability of the cosmetic film according to the ratings below. The scores were averaged and the results were evaluated based on the criteria below. Furthermore, the cosmetics were observed after being allowed to stand at 40°C for one month (5) and after being allowed to stand at 5°C for one month (6). The evaluation results are described in Table 4.

### (Ratings)

| | |
|---|---|
| 5 Points: | Very good |
| 4 Points: | Good |
| 3 Points: | Fair |
| 2 Points: | Rather poor |
| 1 Point: | Poor |

### (Evaluation Criteria)

| | |
|---|---|
| Ⓞ: | The average score is 4.5 points or more. |
| ○: | The average score is 3.5 points or more and less than 4.5 points. |
| Δ: | The average score is 2.5 points or more and less than 3.5 points. |
| ×: | The average score is 1.5 points or more and less than 2.5 points. |
| ××: | The average score is less than 1.5 points. |

**[Table 4]**

| No. | Evaluation items | Example 1 | Example 2 | Comparative Example 1 | Comparative Example 2 | Comparative Example 3 |
|---|---|---|---|---|---|---|
| (1) | Feel (light feel) | ○ | ○ | ○ | ○ | × |
| (2) | Spreadability | Ⓞ | Ⓞ | Ⓞ | ○ | Ⓞ |
| (3) | Film uniformity | Ⓞ | Ⓞ | Ⓞ | △ | ○ |
| (4) | Cosmetic film durability | ○ | ○ | ○ | △ | Δ |
| (5) | State of the cosmetic (40°C) | Stable | Stable | Increased viscosity | Separated | Stable |
| (6) | State of the cosmetic (5°C) | Stable | Stable | Separated | Separated | Stable |

As clear from Table 4, the sunscreens of Examples 1 and 2 as compared to Comparative Examples 1 to 3 were demonstrated to have a light feel, spread well, and form a highly water-repellent and uniform film, that is, a long-lasting and uniform cosmetic film. The sunscreens were also shown to have excellent storage stability.

### INDUSTRIAL APPLICABILITY

The branched organopolysiloxane of the present invention has high volatility and is highly compatible with organic compounds, and is therefore suited for use as, for example, an organic solvent substitute or a cosmetic oil. The production method of the present invention can manufacture the branched organopolysiloxane easily and with high purity, and thus can be suitably used even in applications where impurities are a concern.

## Claims

1. A branched organopolysiloxane represented by formula (1) below: 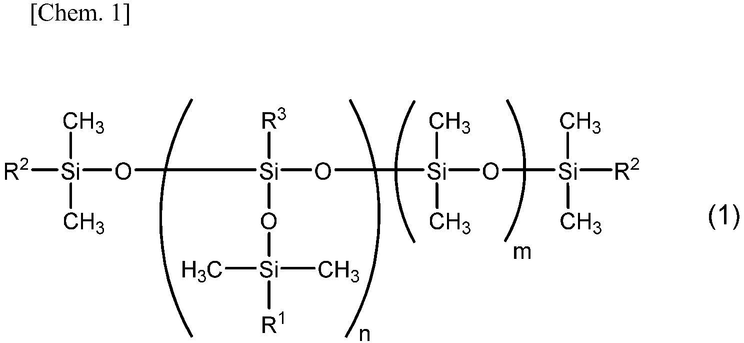 wherein R¹ is independently a C1-C3 alkyl group; R² is independently a C2 or C3 alkyl group; R³ is independently a C1-C3 alkyl group; n is 1 or 2; when n = 1, m is an integer of 0 to 3 and, when n = 2, m is 0 or 1; and the siloxane units are not limited to being bonded in the above order and the manner of bonding of the siloxane units is optionally blockwise or random.

2. The branched organopolysiloxane according to claim 1, which has a boiling point at 10 hPa in the range of 87 to 119°C.

3. The branched organopolysiloxane according to claim 1 or 2, wherein formula (1) is such that R¹ is a methyl group or an ethyl group, R² is an ethyl group, R³ is a methyl group, n is 1, and m is 0.

4. A production method for manufacturing the branched organopolysiloxane described in claim 1, the method comprising a step of hydrosilylating an organohydrogenpolysiloxane represented by formula (2) below with a C2 or C3 alkene, 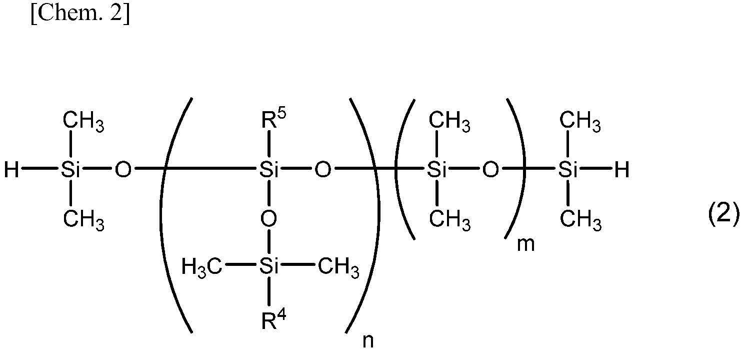 wherein R⁴ is independently a hydrogen atom or a group represented by the R¹; R⁵ is independently a hydrogen atom or a group represented by the R³; m and n are the same as defined in formula (1); and the siloxane units are not limited to being bonded in the above order and the manner of bonding of the siloxane units is optionally blockwise or random.
